# EUROPÄISCHE PATENTSCHRIFT

(11) **EP 1 977 188 B1**
(45) Veröffentlichungstag und Bekanntmachung des Hinweises auf die Patenterteilung: **29.12.2010**
(21) Anmeldenummer: 07702991.6
(22) Anmeldetag: 17.01.2007
(51) Int. Cl.: G01B 5/008, G01B 21/04, G05B 19/19

(54) **KOORDINATENMESSGERÄT UND VERFAHREN ZUM BETREIBEN EINES KOORDINATENMESSGERÄTS**
COORDINATE MEASURING MACHINE AND METHOD FOR OPERATING A COORDINATE MEASURING MACHINE
APPAREIL DE MESURE DE COORDONNEES ET PROCEDE D'UTILISATION D'UN APPAREIL DE MESURE DE COORDONNEES

(30) Priorität: 19.01.2006 DE 102006003362
(43) Veröffentlichungstag der Anmeldung: 08.10.2008
(73) Patentinhaber: Carl Zeiss Industrielle Messtechnik GmbH, 73447 Oberkochen (DE)
(72) Erfinder: UHL, Peter, 73485 Unterschneidheim (DE); MAIER, Thomas, 73434 Aalen (DE); GRUPP, Günter, 89558 Böhmenkirch (DE)
(74) Vertreter: Brunotte, Joachim Wilhelm Eberhard
(86) Internationale Anmeldenummer: PCT/EP2007/000584
(87) Internationale Veröffentlichungsnummer: WO 2007/082779

(56) Entgegenhaltungen:
- DE-A1- 10 024 976
- DE-A1- 19 508 861
- US-A- 5 189 806

## Beschreibung

Die Erfindung betrifft ein Koordinatenmessgerät und ein Verfahren zum Betreiben eines Koordinatenmessgeräts. Das Koordinatenmessgerät weist eine Koordinatenmesseinrichtung auf, insbesondere einen Messkopf. Die Koordinatenmesseinrichtung wird durch zumindest einen Elektromotor angetrieben, so dass sie beweglich ist und z. B. zumindest in einer Richtung verfahrbar ist.

Derartige Koordinatenmessgeräte sind allgemein bekannt, z. B. aus US 2001/013177 A1. Die Erfindung ist jedoch nicht auf eine spezielle Art von Koordinatenmesseinrichtungen (z. B. tastender Messkopf vom schaltenden oder nicht schaltenden Typ) beschränkt.

Beim Vermessen der Koordinaten von Messobjekten mit verfahrbaren Koordinatenmesseinrichtungen sind besondere Vorsichtsmaßnahmen zu ergreifen. Zum einen soll das Messobjekt selbst vor mechanischen Beschädigungen geschützt werden, die beim Anschlagen der Koordinatenmesseinrichtung am Messobjekt entstehen könnten. Zum anderen sind auch Personen und Teile der Messanordnung selbst vor solchen mechanischen Beschädigungen zu schützen. Aus diesem Schutzinteresse könnte die Forderung abgeleitet werden, den oder die Elektromotoren des Koordinatenmessgeräts nur mit geringen elektrischen Strömen zu betreiben. Ferner könnte die Geschwindigkeit, die die von dem Elektromotor angetriebene Koordinatenmesseinrichtung maximal erreichen darf, auf niedrige Werte begrenzt werden. Dem steht jedoch der Wunsch gegenüber, dass die Messung in möglichst kurzer Zeit ausgeführt werden soll. Dies wiederum erfordert hohe Beschleunigungen und, abhängig von den Gegebenheiten des jeweiligen Messaufbaus, unter Umständen auch hohe Geschwindigkeiten der Koordinatenmesseinrichtung.

Aus DE 100 24 976 A1 ist eine Drehmomentregeleinrichtung bekannt, welche einen Ist-Motorstrom mit einem Soll-Motorstrom vergleicht und in Abhängigkeit des Vergleichsergebnisses ein Stellgrößensignal erzeugt. Es wird dafür gesorgt, dass der Motorstrom aufgrund des Vergleichs mit einem maximal erlaubten Motorstrom unterhalb des maximal erlaubten Wertes liegt, um so ein hartes Anschlagen eines Prüfelements an einem Körper zu vermeiden.

Nachteilig an einer solchen Vorgehensweise ist es jedoch, dass der Motorstrom auch dann durch den Maximalwert begrenzt ist, wenn sich das Prüfelement nicht in der Nähe des Messobjekts befindet. Die Geschwindigkeit, mit der das Prüfelement bewegt werden kann, und die Beschleunigung sind daher begrenzt.

Es ist eine Aufgabe der vorliegenden Erfindung, ein Koordinatenmessgerät und ein Verfahren zum Betreiben eines Koordinatenmessgeräts anzugeben, die einen ununterbrochenen Personen- und Geräteschutz beim Vermessen eines Messobjekts ermöglichen. Dabei soll die Koordinatenmesseinrichtung mit beliebigen Geschwindigkeiten und Beschleunigungen verfahrbar sein.

Die Aufgabe wird durch die Gegenstände der beigefügten unabhängigen Patentansprüche gelöst.

Gemäß einem wesentlichen Gedanken der vorliegenden Erfindung wird ein Grenzwert für den elektrischen Antriebstrom des Elektromotors abhängig von einer Sollgeschwindigkeit und/oder abhängig von einer Sollbeschleunigung, mit der bzw. mit denen die Bewegung des Elektromotors oder die Bewegung der Koordinatenmesseinrichtung ablaufen soll, ermittelt.

Diese Grundidee umfasst auch Ausgestaltungen, bei denen nicht die Sollgeschwindigkeit und/oder Sollbeschleunigung zur Ermittlung des Grenzwertes verwendet wird, sondern äquivalente Größen wie beispielsweise die Solldrehzahl des Elektromotors oder einer von diesem angetriebenen Welle bzw. das Solldrehmoment des Elektromotors oder der Welle.

Die Solldrehzahl und Solldrehmoment (bzw. die Soll-Winkelbeschleunigung) sind der Sollgeschwindigkeit und der Sollbeschleunigung äquivalent, wenn von einem störungsfreien Betrieb ausgegangen wird und sich das Übersetzungsverhältnis des Antriebs nicht ändert. Unter störungsfrei wird verstanden, dass sich kein unerwartetes Hindernis auf dem Weg befindet, den die Koordinatenmesseinrichtung zurücklegt. Anders ausgedrückt kann die Vermessung des Messobjekts dadurch geplant werden, dass die Bewegung der Koordinatenmesseinrichtung geplant wird. Für diese Planung können jeweils z. B. sämtliche Komponenten der Sollgeschwindigkeit und der Sollbeschleunigung in einem kartesischen Koordinatensystem (vorzugsweise dem Koordinatensystem, in dem die Koordinaten des Messobjekts bestimmt werden sollen) berechnet werden. Dabei muss keine Vorausberechnung des gesamten Messvorganges vor dem Beginn der Vermessung durchgeführt werden. Vielmehr kann die Vorausberechnung bzw. Vorgabe der Sollwerte z. B. jeweils für einen zeitlichen Abschnitt der Vermessung erfolgen. Wenn der gegenwärtige Bewegungszustand bekannt ist oder bisher ein störungsfreier Messbetrieb stattgefunden hat, kann jedoch auch (insbesondere unter Berücksichtigung eines physikalisch mechanischen Modells des Messaufbaus, einschließlich der bewegten Massen) - äquivalent zu der Sollgeschwindigkeit und/oder Sollbeschleunigung - die Solldrehzahl und/oder das Solldrehmoment bei der Ermittlung des Stromgrenzwertes berücksichtigt werden.

Die Erfindung ermöglicht es dem Betreiber eines Koordinatenmessgeräts, während bestimmter zeitlicher Abschnitte der Bewegung der Koordinatenmesseinrichtung höhere Geschwindigkeiten und/oder Beschleunigungen zu erlauben als in anderen Phasen. Beispielsweise kann die Koordinatenmesseinrichtung aus einer Warteposition, in der sie sich weit entfernt vom Messobjekt befindet, mit hohen Beschleunigungswerten auf eine hohe Geschwindigkeit gebracht werden, bis sie in einen vordefinierten Bereich in der Nähe des Messobjekts gelangt. Ferner kann insbesondere aus Gründen des Personenschutzes selbst außerhalb des Nahbereichs in bestimmten Gefahrbereichen nur eine geringere Geschwindigkeit oder Beschleunigung erlaubt sein.

Entsprechend den so geplanten und/oder definierten Bewegungsphasen oder Bewegungsbereichen gelten unterschiedliche Stromgrenzwerte. Um eine hohe Beschleunigung der Koordinatenmesseinrichtung zu erzielen, ist ein entsprechend hoher Stromgrenzwert erforderlich. Ist nur eine langsame Geschwindigkeit vorgegeben und sind nur geringe Beschleunigungswerte erlaubt, kann der Stromgrenzwert niedrig gewählt werden.

Insbesondere wird ein Verfahren zum Betreiben eines Koordinatenmessgeräts vorgeschlagen, wobei eine Koordinatenmesseinrichtung, insbesondere ein Messkopf, des Koordinatenmessgeräts angetrieben durch zumindest einen Elektromotor in zumindest einer Richtung verfahrbar ist und wobei das Verfahren folgende Schritte aufweist:
(a) ein elektrischer Antriebstrom, der durch den Elektromotor fließt, um eine Bewegung des Elektromotors und auf diese Weise eine Bewegung der Koordinatenmesseinrichtung zu bewirken, wird gemessen,
(b) abhängig von einer Sollgeschwindigkeit und/oder abhängig von einer Sollbeschleunigung, mit denen die Bewegung des Elektromotors oder die Bewegung der Koordinatenmesseinrichtung ablaufen soll, wird ein Grenzwert für den elektrischen Antriebstrom ermittelt, und
(c) wenn der elektrische Antriebstrom den ermittelten Grenzwert erreicht und/oder wenn der elektrische Antriebstrom den ermittelten Grenzwert überschreitet, wird die Koordinatenmesseinrichtung in einen vordefinierten Zustand gebracht.

"Überschreiten" des Grenzwertes beinhaltet, dass der Antriebstrom in einem Fall z. B. größer als der Grenzwert wird und in einem anderen Fall z. B. kleiner als der Grenzwert wird. "Überschreiten" ist also im Sinne eines "Überquerens" zu verstehen. Die Ermittlung eines Grenzwertes und die Überwachung, ob der Grenzwert erreicht und/oder überschritten wird, schließt auch die Möglichkeit eines Grenzwertbandes ein, d. h. eines Bereichs von Werten für den Antriebstrom, der durch einen unteren Grenzwert und einen oberen Grenzwert definiert ist. Es wird dann überwacht, ob der Antriebstrom das Grenzwertband, d. h. den Bereich, verlässt, in welchem Fall die Koordinatenmesseinrichtung in den vordefinierten Zustand gebracht wird.

Die Bestimmung von Koordinaten in einem Koordinatensystem ist nicht darauf beschränkt, dass die Koordinaten kartesische Koordinaten sind. Vielmehr können Koordinaten jeglicher Art bestimmt werden, beispielsweise Polarkoordinaten, Zylinderkoordinaten usw..

Unter einem Koordinatenmessgerät wird nicht nur ein Gerät verstanden, mit dem Koordinaten in einem Koordinatensystem bestimmt werden können, sondern auch ein Gerät, das die Überprüfung einer Position eines Messobjekts ermöglicht, beispielsweise wie in DE 100 24 976 A1 beschrieben. Noch allgemeiner formuliert kann die so genannte Koordinatenmesseinrichtung lediglich ausgestaltet sein, die Anwesenheit eines Körpers zu überprüfen. Beispielsweise kann die Koordinatenmesseinrichtung einen mechanischen Sensor und/oder einen optischen Sensor aufweisen.

Ein wesentlicher Vorteil der erfindungsgemäßen Stromüberwachung besteht darin, dass die Überwachung auch während einer beschleunigten Bewegung der Koordinatenmesseinrichtung aktiv bleiben kann. Es können prinzipiell beliebig hohe Beschleunigungswerte zugelassen werden, ohne dass die Stromüberwachung ausgeschaltet werden muss.

Es ist ein funktionaler Zusammenhang zwischen der Sollgeschwindigkeit und/oder der Sollbeschleunigung einerseits und dem Stromgrenzwert andererseits zumindest für eine bestimmte Betriebsphase fest vorgegeben. Dabei kann der funktionale Zusammenhang zusätzlich von weiteren Parameter abhängen, die z. B. durch einen oder mehrere der folgenden Faktoren eindeutig bestimmt sind: durch die Umgebungstemperatur, durch die Temperatur von Teilen des Koordinatenmessgeräts (z. B. Temperatur der Lager, die bei der Bewegung der Koordinatenmesseinrichtung bewegliche Teile lagern), durch die Position der Koordinatenmesseinrichtung in einem ortsfesten Koordinatensystem, durch die relative Position der Koordinatenmesseinrichtung in Bezug auf das Messobjekt oder in Bezug auf andere Teile des Messaufbaus und/oder durch Betriebszustände (wie z. B. eine aktuell gewählte Getriebestufe eines mehrstufigen Getriebes, welches bei der Kraftübertragung des Elektromotors auf die zu verfahrende Koordinatenmesseinrichtung eingesetzt wird), bestimmt sein. Die Berücksichtigung solcher Parameter erhöht die Sicherheit weiter. Auf diese Weise kann der Stromgrenzwert dichter bei dem tatsächlich für den Betrieb benötigten Stromwert liegen. Beispielsweise ist die Reibung in den verschiedenen wählbaren Getriebestufen verschieden groß. Je größer die Reibung ist, desto höher muss der Stromgrenzwert gewählt werden. Außerdem können zum Beispiel Parameter für einen oder mehrere der folgenden Betriebzustände in dem funktionalen Zusammenhang berücksichtigt werden:
(a) ein Teil der Koordinatenmesseinrichtung, z. B. ein Messkopf erreicht einen vordefinierten Bereich;
(b) eine Person oder ein Gegenstand gelangt in einen vordefinierten Bereich;
(c) die absoluten Positionen und/oder Relativpositionen verschiedener Teile der Koordinatenmesseinrichtung erfüllen ein vordefiniertes Kriterium.

Das Erreichen bzw. Hineingelangen kann durch Schutzeinrichtungen wie z. B. Lichtschranken und/oder Trittmatten detektiert werden (Punkte a und b). Ob das vordefinierte Kriterium erfüllt ist, wird z. B. durch Auswerten der Koordinaten verschiedener Koordinatenachsen ermittelt.

Insbesondere ist daher ein Grenzwert jeweils nur momentan für den aktuellen Betriebszeitpunkt und/oder für einen kurzen Zeitraum gültig, z. B. bis eine Recheneinrichtung auf Basis geänderter Werte der Sollgeschwindigkeit und/oder der Sollbeschleunigung einen neuen Grenzwert für den Motorstrom berechnet hat oder z. B. durch Auslesen aus einem Datenspeicher ermittelt hat.

Wenn der vorgegebene und/oder aktuelle Grenzwert überschritten wird oder wenn der Grenzwert erreicht oder überschritten wird, können automatisch Maßnahmen ergriffen werden, um den vordefinierten Zustand herzustellen. Der vordefinierte Zustand wurde vor dem Überschreiten oder Erreichen des Grenzwertes definiert.

Eine Möglichkeit für die Maßnahmen besteht darin, ein oder mehrere Warnsignale (akustisch und/oder optisch) auszugeben. Vorzugsweise wird jedoch der elektrische Antriebstrom abgeschaltet und/oder die Koordinatenmesseinrichtung so von ihren Antriebsmitteln abgekoppelt, dass sie keine Kräfte mehr auf andere Gegenstände übertragen kann. Dies bedeutet, dass die Koordinatenmesseinrichtung und vorzugsweise das gesamte Koordinatenmessgerät oder -system in einen so genannten sicheren Zustand gebracht werden. Die zu ergreifenden Maßnahmen enthalten als eine mögliche Ausführungsform auch die Begrenzung der Kraft und/oder des Drehmoments des Elektromotors auf einen vorgegebenen Wert. Dieser Wert kann unveränderlich sein oder vom Betriebszustand, der Position der Koordinatenmesseinrichtung und/oder von weiteren Faktoren abhängen. Vorzugsweise wird der elektrische Antriebstrom abgeschaltet, wenn der elektrische Antriebstrom den ermittelten Grenzwert kontinuierlich über ein Zeitintervall vorgegebener Länge hinweg erreicht und/oder überschreitet. Alternativ oder zusätzlich kann bei der Feststellung, ob der Grenzwert erreicht und/oder überschritten ist, als elektrischer Antriebstrom ein Wert verwendet werden, der nach Glättung von zeitlichen Schwankungen des ermittelten Messwertes ermittelt worden ist. In beiden Fällen kann hierdurch sichergestellt werden, dass eine sehr kurzzeitige (insbesondere durch einen Messfehler verursachte) Überschreitung oder das sehr kurzzeitige Erreichen des Grenzwertes noch keine Auswirkungen auf den Betrieb des Koordinatenmessgeräts haben.

Besonders schnell gelangt die Koordinatenmesseinrichtung zum Stillstand, wenn, wie bei einer bevorzugten Ausführungsform, eine Stromrichtung des elektrischen Antriebstroms zunächst umgekehrt wird, bevor der elektrische Antriebstrom abgeschaltet wird. Mit dieser Maßnahme kann die Zeit ausgenutzt werden, die in der Regel für das Abschalten von Schaltern (z. B. Relais) benötigt wird. Bis das Magnetfeld des Schalters abgeklungen ist, konnte der Strom schon umgekehrt werden und auf diese Weise die Bewegung der Koordinatenmesseinrichtung verlangsamt oder gestoppt werden.

Vorzugsweise ist eine Mehrzahl von Elektromotoren des Koordinatenmessgeräts vorgesehen, die zusammengenommen die Bewegung der Koordinatenmesseinrichtung bewirken. Dabei sind die Bewegungen der Elektromotoren eindeutig Bewegungskomponenten der Bewegung der Koordinatenmesseinrichtung zugeordnet. Z. B. ist jeweils zumindest ein Elektromotor für eine Linearbewegung der Koordinatenmesseinrichtung vorgesehen, wobei jede der Linearbewegungen ausschließlich in einer von drei paarweise zueinander senkrecht stehenden Richtungen stattfinden kann. Im Ergebnis kann innerhalb eines erreichbaren Bewegungsbereichs somit jeder gewünschte Punkt auf direktem Weg angefahren werden. Allgemein wird im Fall der Mehrzahl von Elektromotoren, die gemeinsam die Bewegung der Koordinatenmesseinrichtung bewirken, vorzugsweise für jeden der Mehrzahl von Elektromotoren separat ein Grenzwert des elektrischen Antriebstroms ermittelt, wobei dieser Grenzwert abhängig von einer Sollgeschwindigkeit und/oder abhängig von einer Sollbeschleunigung der Bewegungskomponente ist, die von dem jeweiligen Elektromotor bewirkt wird.

Im Fall eines Koordinatenmessgeräts mit jeweils zumindest einem Elektromotor für die X-Achse, die Y-Achse und die Z-Achse in einem kartesischen Koordinatensystem werden also separat Grenzwerte für die Motorströme abhängig von den Sollgeschwindigkeitswerten und/oder abhängig von den Sollbeschleunigungswerten in X-Richtung, in Y-Richtung und in Z-Richtung ermittelt.

Insbesondere kann für zumindest eine der Bewegungskomponenten eine Mehrzahl von Elektromotoren vorgesehen sein, wie es beispielsweise bei Koordinatenmessgeräten in Portalbauweise der Fall ist. In diesem Fall wird vorzugsweise für jeden der Elektromotoren derselben Bewegungskomponente der Grenzwert ermittelt (im Fall baugleicher Elektromotoren kann u. U. derselbe Grenzwert verwendet werden) und wird separat überwacht, ob der Grenzwert für den betrachteten Elektromotor erreicht und/oder überschritten wird.
Bei einer bevorzugten Ausgestaltung wird zumindest ein gemessener Wert des elektrischen Antriebstroms während des Betriebes des Koordinatenmessgeräts, insbesondere während einer Bewegung der Koordinatenmesseinrichtung, mit einem erwarteten Wert verglichen wird, um die Messung des elektrischen Antriebstroms auf Messfehler zu überprüfen. Der erwartete Wert kann z. B. unter Verwendung der Sollgeschwindigkeit und der Sollbeschleunigung ermittelt werden. Unter der Voraussetzung, dass die Koordinatenmesseinrichtung sich ungehindert bewegt, kann auf diese Weise die Messung des elektrischen Antriebstroms auf fehlerfreie Funktionsweise überprüft werden. Bei Geräten mit mehr als einem Motor für eine Bewegungsrichtung (z.B. Doppelantrieb an einem Gantry-Gerät in Portal- oder Brückenbauweise) ist es vorteilhaft, nicht die einzelnen Motorströme sondern die Summe der Motorströme der beiden Motoren des Doppelantriebes zu begrenzen.

Eine weitere Möglichkeit der Erkennung eines fehlerhaften Sensors zur Messung des Motorstroms oder einer fehlerhaften Verarbeitung der von einem solchen Sensor gelieferten Signale besteht in einer Prüfung der Messwerte auf Plausibilität. Bei der Plausibilitätsprüfung steht kein fester Vergleichswert zur Verfügung. Vielmehr können zeitliche Veränderungen des Strommesswertes in geeigneten Betriebsphasen ausgewertet werden. Z. B. muss der Strom nach einer Phase der Beschleunigung der Koordinatenmesseinrichtung, auf die eine Phase konstanter Geschwindigkeit der Koordinatenmesseinrichtung folgt, auf einen deutlich niedrigeren Wert zurückgehen. Vergleichswerte für die Plausibilitätsprüfung können insbesondere die Sollgeschwindigkeit, die Sollbeschleunigung und/oder die tatsächliche Geschwindigkeit oder Beschleunigung sein, die durch Auswertung eines Tachosignals und/oder durch die Informationen erhalten werden, die von dem Koordinatenmessgerät für die eigentliche Bestimmung von Koordinaten eines Messobjekts genutzt werden.

Alternativ oder zusätzlich ist es möglich, einen Eich-Betrieb des Koordinatenmessgeräts durchzuführen, während dem die Koordinatenmesseinrichtung ohne Behinderung durch Gegenstände frei verfahren wird. Dieser Eich-Betrieb dient nicht der Überprüfung der Strommessung, sondern der Ermittlung von Stromwerten des Elektromotor-Stroms. Insbesondere können normale Werte des elektrischen Antriebstroms für verschiedene Werte der Geschwindigkeit und/oder der Beschleunigung der Koordinatenmesseinrichtung gemessen und gespeichert werden und wobei aus den normalen Werten vor dem Betrieb des Koordinatenmessgeräts Grenzwerte des elektrischen Antriebstroms für verschiedene Werte der Sollgeschwindigkeit und/oder der Sollbeschleunigung festgelegt werden. Unter "normalen" Werten werden Werte verstanden, die unter normalen Betriebsbedingungen, ohne Behinderung der Bewegung der Koordinatenmesseinrichtung entstanden sind. Soll der Strom-Grenzwert abhängig von zumindest einem weiteren Parameter ermittelbar sein, wird dieser Parameter bzw. werden diese Parameter vorzugsweise während des Eich-Betriebes festgestellt und variiert.
Auf diese Weise kann beispielsweise ein Computer des Koordinatenmessgeräts lernen, wie hoch der Strom in Abhängigkeit von der Geschwindigkeit und/oder in Abhängigkeit von der Beschleunigung ist. Ein entsprechender, etwas höher liegender Stromgrenzwert kann dann für jeden Geschwindigkeitswert und/oder Beschleunigungswert festgelegt werden und z. B. auf einer Festplatte oder einem anderen Permanent-Datenspeicher abgespeichert werden.

Vorzugsweise werden die gespeicherten Daten mittels einer Kontrollgröße wie z. B. einer CRC (Cyclic Redundancy Code) Prüfsumme gegen unbeabsichtigte Veränderungen gesichert.

Beispielsweise kann der Stromgrenzwert in einem einfachen Fall dadurch festgelegt werden, dass der für den jeweiligen Betriebszustand ermittelten Stromwert um einen fest vorgegebenen Betrag erhöht wird. Optional ist der fest vorgegebenen Betrag jedoch auch von der Geschwindigkeit (und außerdem optional von weiteren Parametern wie der Temperatur) abhängig.

Um die während des Eich-Betriebes ermittelten Stromwerte der Geschwindigkeit und der Beschleunigung der Koordinatenmesseinrichtung zuordnen zu können, werden bei einer Ausgestaltung der Erfindung die Geschwindigkeit und die Beschleunigung der Koordinatenmesseinrichtung während des Eich-Betriebes unter Verwendung einer für den eigentlichen Betrieb des Koordinatenmessgeräts vorgesehenen Auswertungseinrichtung zur Bestimmung von Koordinaten und/oder unter Verwendung eines Tachosignals des Elektromotors bestimmt. Unter einem Tachosignal wird ein Signal eines Signalgebers verstanden, der mit dem Elektromotors kombiniert ist. Beispielsweise erzeugt der Signalgeber jeweils dann ein elektrisches Signal, wenn sich ein Läufer des Elektromotors um einen bestimmten fest vorgegebenen Winkelbetrag weiter gedreht hat. Tachosignale werden z. B. zur Regelung des Betriebs des Elektromotors verwendet. Sie dienen als Rückkopplungssignal für eine Regeleinrichtung (Endstufe), die den Motorstrom einstellt.

Die Ermittlung des Stromgrenzwertes, der von der Sollgeschwindigkeit und/oder von der Sollbeschleunigung der Koordinatenmesseinrichtung abhängt, wird vorzugsweise von zumindest einer Recheneinrichtung durchgeführt. Alternativ oder zusätzlich kann die Recheneinrichtung auch die Maßnahmen einleiten und/oder steuern, die zu ergreifen sind, wenn der Stromgrenzwert erreicht und/oder überschritten wird. Diese Funktionalität der Recheneinrichtung kann durch Hardware und/oder Software realisiert werden.

Wie noch anhand der Figuren näher beschrieben wird, kann eine Mehrzahl von Recheneinrichtungen verwendet werden, um die Sicherheit gegen einen Ausfall der Stromüberwachung zu erhöhen.

Zum Umfang der vorliegenden Erfindung gehört auch ein
Koordinatenmessgerät mit einer Koordinatenmesseinrichtung, insbesondere einem Messkopf, die angetrieben durch zumindest einen Elektromotor in zumindest einer Richtung verfahrbar ist. Das Koordinatenmessgerät weist Folgendes auf:
(a) eine Strom-Messeinrichtung, die ausgestaltet ist, einen elektrischen Antriebstrom, der durch den Elektromotor fließt, um eine Bewegung des Elektromotors zu erzeugen und auf diese Weise eine Bewegung der Koordinatenmesseinrichtung zu bewirken, zu messen,
(b) eine Sollwert-Ermittlungseinrichtung, die ausgestaltet ist, abhängig von einer Sollgeschwindigkeit und/oder abhängig von einer Sollbeschleunigung, mit denen die Bewegung des Elektromotors oder die Bewegung der Koordinatenmesseinrichtung ablaufen soll, einen Grenzwert für den elektrischen Antriebstrom zu ermitteln, und
(c) eine Betätigungseinrichtung, die mit der Strom-Messeinrichtung und mit der Sollwert-Ermittlungseinrichtung verbunden ist und die ausgestaltet ist, die Koordinatenmesseinrichtung in einen vordefinierten Zustand (z. B. einen so genannten sicheren Zustand) zu bringen, wenn der elektrische Antriebstrom den ermittelten Grenzwert erreicht und/oder wenn der elektrische Antriebstrom den ermittelten Grenzwert überschreitet (bzw. wenn der Antriebstrom das Grenzwertband verlässt).

Zum Beispiel weist die Betätigungseinrichtung eine Abschalteinrichtung auf, die mit der Strom-Messeinrichtung und mit der Sollwert-Ermittlungseinrichtung verbunden ist und die ausgestaltet ist, den elektrischen Antriebstrom abzuschalten, wenn der elektrische Antriebstrom den ermittelten Grenzwert erreicht und/oder wenn der elektrische Antriebstrom den ermittelten Grenzwert überschreitet.

Insbesondere kann das Koordinatenmessgerät einen Computer oder eine Recheneinrichtung aufweisen, die die Sollwert-Ermittlungseinrichtung enthält. Ferner gehört zum Umfang der Erfindung ein Computerprogramm, das bei Ablauf auf einem Computer oder Computer-Netzwerk zumindest den Stromgrenzwert ermittelt und optional auch die bei Erreichen und/oder Überschreiten des Stromgrenzwertes die jeweils zu ergreifenden Maßnahmen eingeleitet und/oder steuert. Insbesondere weist das Computerprogramm Programmcode-Mittel auf, die auf einem computerlesbaren Datenträger gespeichert sein können.

Die erfindungsgemäße Überwachung des Antriebstroms kann optional abgeschaltet werden.

Außerdem gehört zum Umfang der Erfindung ein Datenträger, auf dem eine Datenstruktur gespeichert ist, die nach einem Laden in einen Arbeits- und/oder Hauptspeicher eines Computers oder Computer-Netzwerkes zumindest den Stromgrenzwert ermittelt und optional auch die bei Erreichen und/oder Überschreiten des Stromgrenzwertes die jeweils zu ergreifenden Maßnahmen eingeleitet und/oder steuert.

Ausführungsbeispiele der Erfindung werden nun unter Bezugnahme auf die beigefügte Zeichnung beschrieben. Dabei wird eine besonders bevorzugte Ausführungsform der Erfindung anhand der Figuren 2 bis 5 beschrieben. Die einzelnen Figuren der Zeichnung zeigen:
- Figur 1: ein Koordinatenmessgerät in Portalbauweise,
- Figur 2: schematisch eine Anordnung mit einer Leistungsstufe (Endstufe) von der ein Elektromotor mit Motorstrom versorgt wird,
- Figur 3: die Geschwindigkeit und der Stromgrenzwert als Funktion der Zeit für ein einfaches Beispiel des Betriebs eines Koordinatenmessgeräts,
- Figur 4: eine Messkette bei der Verarbeitung eines Messwertes des Motorstroms und
- Figur 5: schematisch eine Anordnung mit einem Computer und zumindest einem Mikrocontroller zur Überwachung des Motorstroms.

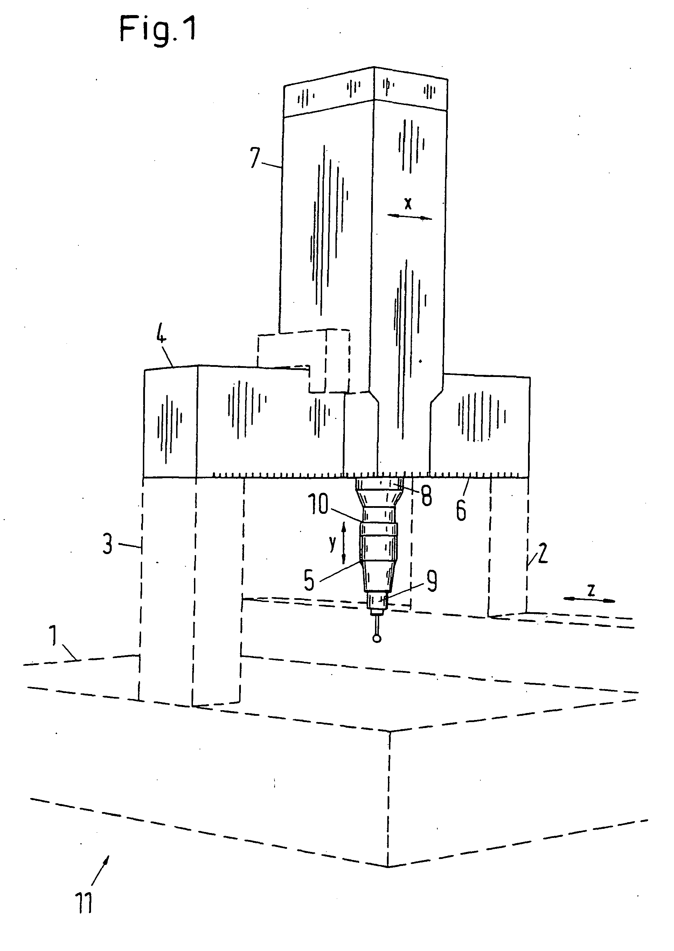

Das in Fig. 1 dargestellte Koordinatenmessgerät (KMG) 11 in Portalbauweise weist einen Messtisch 1 auf, über dem Säulen 2, 3 in Z-Richtung eines kartesischen Koordinatensystems beweglich angeordnet sind. Die Säulen 2, 3 bilden zusammen mit einem Querträger 4 ein Portal des KMG 11. Der Querträger 4 ist an seinen gegenüberliegenden Enden mit den Säulen 2 bzw. 3 verbunden. Nicht näher dargestellte Elektromotoren verursachen die Linearbewegung der Säulen 2, 3 in Z-Richtung. Dabei ist jeder der beiden Säulen 2, 3 ein Elektromotor zugeordnet.

Der Querträger 4 ist mit einem Querschlitten 7 kombiniert, welcher luftgelagert entlang dem Querträger 4 in X-Richtung des kartesischen Koordinatensystems beweglich ist. Die momentane Position des Querschlittens 7 relativ zu dem Querträger 4 kann anhand einer Maßstabsteilung 6 festgestellt werden. Die Bewegung des Querträgers 4 in X-Richtung wird durch einen weiteren Elektromotor angetrieben.

An dem Querschlitten 7 ist eine in vertikaler Richtung bewegliche Pinole 8 gelagert, die an ihrem unteren Ende über eine Montageeinrichtung 10 mit einer Koordinatenmesseinrichtung 5 verbunden ist. An der Koordinatenmesseinrichtung 5 ist ein Tastkopf 9 abnehmbar angeordnet. Die Koordinatenmesseinrichtung 5 kann angetrieben durch einen weiteren Elektromotor relativ zu dem Querschlitten 7 in Y-Richtung des kartesischen Koordinatensystems bewegt werden. Durch die insgesamt vier Elektromotoren kann der Tastkopf 9 daher zu jedem Punkt unterhalb des Querträgers 4 und oberhalb des Messtisches 1 verfahren werden, der in dem durch die Säulen 2, 3 definierten Zwischenraum liegt.

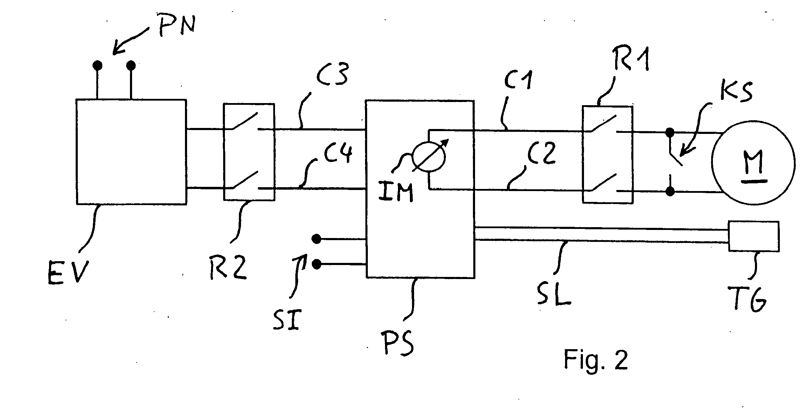

Die in Figur 2 dargestellte Anordnung lässt einige Details erkennen, wie einer der Elektromotoren M eines Koordinatenmessgeräts, z. B. des anhand von Figur 1 beschriebenen Koordinatenmessgeräts, während des Betriebes mit Strom versorgt wird und gesteuert wird. Der Motor M ist in dem Ausführungsbeispiel über zwei elektrische Verbindungen C1, C2 mit einer Leistungsstufe PS verbunden. Die Leistungsstufe PS weist einen Signaleingang SI auf, über den sie z. B. von einem Computer oder von einem Mikrocontroller ein Steuersignal empfängt. Entsprechend dem Steuersignal stellt die Leistungsstufe PS den über die Leitungen C1, C2 fließenden Motorstrom ein.

Als Eingangsgrößen der Gesamt-Regelungseinrichtung können insbesondere die Sollposition und die Istposition und/oder die Sollgeschwindigkeit der Koordinatenmesseinrichtung dienen. Die Gesamt-Regelungseinrichtung kann außer der Endstufe weitere Regler aufweisen, z. B. Stromregler, Drehzahlregler und Lageregler.

Über einen Netzanschluss PN, der mit einem elektrischen Wechselspannungs-Energieversorgungsnetz verbunden werden kann, eine
Energieversorgungseinheit EV, die beispielsweise einen Transformator und einen Gleichrichter aufweist, ein zweipoliges Relais R2 und über zwei elektrische Verbindungen, die die Energieversorgungseinheit EV über das Relais R2 mit der Leistungsstufe PS verbinden, kann die Leistungsstufe PS mit elektrischer Energie versorgt werden, die sie zur Speisung des Motorstroms benötigt.

Die Leistungsstufe PS weist eine Strommesseinrichtung IM auf oder ist mit einer solchen Strommesseinrichtung kombiniert, mit der der durch die elektrischen Verbindungen C1, C2 und durch den Motor M fließende Motorstrom gemessen werden kann. Ferner weist die Leistungsstufe PS ein in der Figur 2 nicht näher dargestelltes Stellglied zum Einstellen des Motorstroms auf.

Ferner ist ein Tachosignalgeber TG vorgesehen, der abhängig von der Bewegung des Elektromotors Tachosignale erzeugt und über eine Signalleitung SL an die Leistungsstufe PS überträgt. Bei dem Tachosignalgeber handelt es sich z. B. um einen Drehtransformator, der eine der Drehzahl entsprechende Spannung generiert.

Während des Betriebes des Koordinatenmessgeräts stellt die Leistungsstufe PS somit entsprechend dem am Steuersignaleingang SI anliegenden Steuersignal (beispielsweise ein analoger Gleichspannungswert im Bereich - 10V bis +10V) den Motorstrom in den elektrischen Verbindungen C1, C2 (Gleichstrom) ein und regelt ihn, wobei die Leistungsstufe PS das von dem Tachosignalgeber erzeugte Tachosignal kontinuierlich oder quasi kontinuierlich auswertet.

Wenn das Koordinatenmessgerät eine Mehrzahl von Motoren aufweist, ist vorzugsweise jeweils ein Exemplar der in Figur 2 dargestellten Anordnung für jeden der Elektromotoren vorgesehen. Dabei kann aber die Energieversorgungseinheit EV beispielsweise gemeinsam von allen Anordnungen genutzt werden.

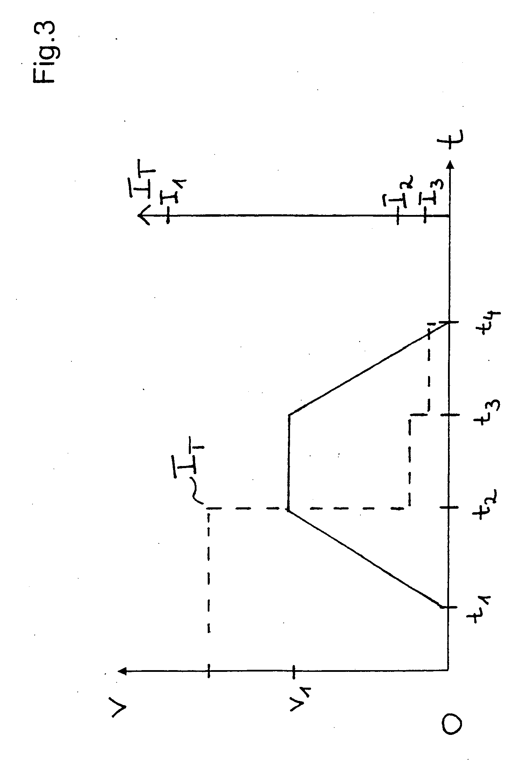

Figur 3 zeigt einen trapezförmigen zeitlichen Verlauf der Geschwindigkeit der Koordinatenmesseinrichtung. Im hier beschriebenen Ausführungsbeispiel handelt es sich bei der Geschwindigkeit z. B. um die Komponente des Geschwindigkeitsvektors in X-Richtung des in Figur 1 dargestellten-Koordinatensystems.

Zum Zeitpunkt t₁ beginnt die Geschwindigkeit v linear anzusteigen. Der lineare Anstieg dauert an bis der Zeitpunkt t₂ erreicht ist. Entsprechend dem linearen Anstieg der Geschwindigkeit v ist die Beschleunigung in X-Richtung konstant. Um die Beschleunigung zu erzielen muss der zugehörige Elektromotor mit einem verhältnismäßig großen, annähernd konstanten Strom versorgt werden. Dementsprechend verläuft der Stromgrenzwert I_{T} (gestrichelte Linie in dem Diagramm gemäß Figur 3) im Zeitintervall [t₁; t₂] konstant auf einem hohen Wert I₁. Erst wenn dieser hohe Grenzwert I₁ überschritten wird oder wenn der Grenzwert I_{T} erreicht wird, werden entsprechende Maßnahmen ergriffen.

Am Ende der Beschleunigungsphase, zum Zeitpunkt t₂, hat die Geschwindigkeit v den Wert v₁ erreicht. Im weiteren Verlauf der Bewegung (bzw. der Bewegungskomponente in X-Richtung) bleibt die Geschwindigkeit v bis zum Erreichen des Zeitpunkts t₃ auf dem Wert v₁. Dementsprechend ist nur ein sehr viel geringerer Motorstrom als vorher in der Beschleunigungsphase erforderlich. Der Motorstrom muss im Wesentlichen lediglich deswegen aufgebracht werden, weil die Bewegung des Motors und der von dem Motor angetriebenen beweglichen Teile nicht reibungsfrei verläuft. Der Stromgrenzwert I_{T} kann jedoch sehr viel niedriger liegen als in der Beschleunigungsphase zuvor. Der in der Darstellung im mittleren zeitlichen Bereich eingezeichnete Wert I₂ reicht als Stromgrenzwert I_{T} aus.

Zum Zeitpunkt t₃ beginnt eine Phase der negativen Beschleunigung (Verzögerung) mit einem konstanten Wert bis der Stillstand der Koordinatenmesseinrichtung bezüglich der X-Richtung zum Zeitpunkt t₄ erreicht ist. Hierfür ist ein noch geringerer Stromgrenzwert I₃ ausreichend.

Abhängig von der Reibung, die während dieser Verzögerungsphase zu überwinden ist, kann sogar ein negativer Motorstrom fließen, also kann der Motor aktiv durch Stromumkehr gebremst werden müssen. Dennoch wird vorzugsweise ein positiver Stromgrenzwert I₃ für die Verzögerungsphase gewählt. Falls es nämlich während der Verzögerungsphase unerwünscht zu einem Anschlagen eines der von dem Elektromotor angetriebenen Teile kommt, würde die Leistungsstufe (beispielsweise die in der Anordnung gemäß Figur 2 gezeigte Leistungsstufe) versuchen, den Motorstrom hochzuregeln.

Durch das Hochregeln des Motorstroms wird dann der Stromgrenzwert I3 schnell erreicht werden, was wiederum zum Ergreifen der entsprechenden Maßnahmen führt.

Bevorzugtermaßen wird beim Erreichen oder beim Überschreiten des jeweils zu einem bestimmten Zeitpunkt gültigen Stromgrenzwertes schnellstmöglich ein Steuersignal an die Leistungsstufe PS ausgegeben, das die Leistungsstufe PS zur Umkehrung des Motorstroms veranlasst, wenn nicht bereits ein umgekehrter Motorstrom fließt (d. h. ein Motorstrom, der den Motor aktiv bremst). Außerdem werden über nicht in Figur 2 dargestellte Steuerleitungen sowohl das Relais R1 als auch das Relais R2 angesteuert, um beide Relais R1, R2 zu öffnen. Wenn die beiden Relais geöffnet sind, ist sowohl die Stromversorgung der Leistungsstufe PS (über die elektrischen Verbindungen C3, C4) als auch die Motorstromleitung (elektrische Verbindungen C1, C2) unterbrochen. Außerdem wird vorzugsweise über einen Kurzschlussschalter KS (siehe Figur 2), der zwischen dem Relais R1 und dem Motor M angeordnet ist, ein Kurzschluss der beiden Motorstromanschlüsse bewirkt, an denen die elektrischen Verbindungen C1, C2 angeschlossen sind. Hierbei ist darauf zu achten, dass der Kurzschluss erst dann hergestellt wird, wenn das Relais R1 bereits geöffnet ist.

Anhand von Figur 3 wurde die Abhängigkeit des Stromgrenzwertes I_{T} von der Beschleunigung erläutert. Es soll noch erwähnt werden, dass es sich bei der trapezförmigen Geschwindigkeitskurve um eine Sollkurve handelt. D. h. der Stromgrenzwert wird in Abhängigkeit von der Sollbeschleunigung festgelegt. Zusätzlich kann der Stromgrenzwert von der Sollgeschwindigkeit abhängen. Würde beispielsweise im Zeitintervall [t₂; t₃] eine höhere Sollgeschwindigkeit v gefahren, wäre ein höherer Stromgrenzwert als der in Figur 3 dargestellte Grenzwert I₂ zu wählen, da insbesondere mit höherer Reibung zu rechnen ist. Auch kann in Abänderung des stufenförmigen Verlaufs des Stromgrenzwerts I_{T} mit jeweils waagerechten, konstanten Stromgrenzwerten I₁, I₂, I₃ auch während der Phasen mit konstanter Beschleunigung und konstanter Verzögerung ein sich veränderter Stromgrenzwert I_{T} vorgegeben werden. Insbesondere kann der Stromgrenzwert bei höheren Geschwindigkeitswerten auch während dieser Phasen höher gewählt werden als bei niedrigeren Geschwindigkeitswerten.

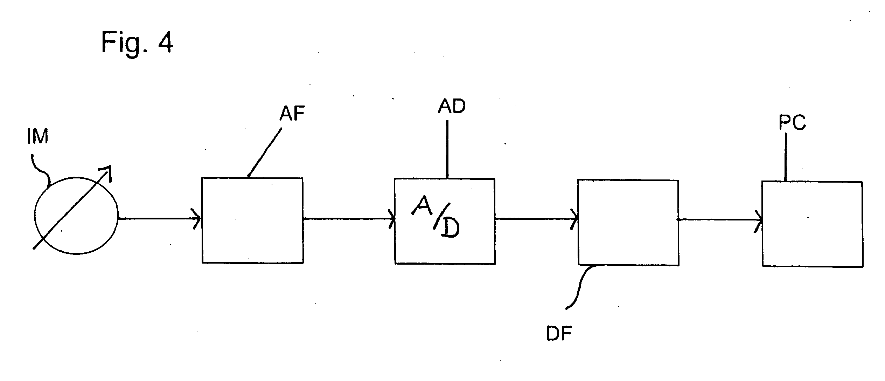

Die Verarbeitung der Strommesswerte des Motorstromsensors IM in der Leistungsstufe PS erfolgt beispielsweise mit der in Figur 4 dargestellten Anordnung. Der Stromsensor IM liefert ein analoges Messsignal, das optional über ein analoges Filter AF zur zeitlichen Glättung des Messsignals einem Analog-/Digitalwandler AD zugeführt wird. In dem Wandler AD wird das analoge Signal in ein digitales Signal umgewandelt und über ein weiteres optionales digitales Filter DF zur zeitlichen Glättung des Messsignals einem Computer PC zugeführt. Bei dem Computer PC kann es sich beispielsweise um eine Recheneinrichtung handeln, in der auch der aktuelle Stromgrenzwert in Abhängigkeit von der Sollgeschwindigkeit und in Abhängigkeit von der Sollbeschleunigung ermittelt wird. Ferner kann der Computer PC optional auch das Steuersignal erzeugen, welches über den Signaleingang SI der Leistungsstufe PS zugeführt wird.

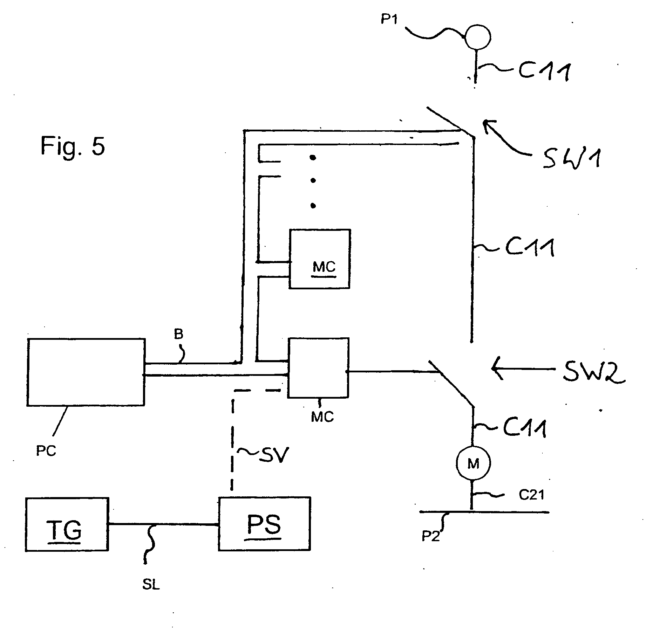

Figur 5 zeigt eine Anordnung, auf deren verschiedene mögliche Funktionsweisen später noch eingegangen wird. Die Anordnung zeigt einen Computer PC, der über einen Datenbus B verfügt oder an einen solchen Datenbus angeschlossen ist. Ferner sind mit dem Datenbus mehrere Mikrocontroller MC verbunden. In der Figur 5 sind zwei der Mikrocontroller MC dargestellt. Wie durch drei Punkte angedeutet ist, können jedoch noch mehr Mikrocontroller vorgesehen sein, vorzugsweise je ein Mikrocontroller für jeden zu überwachenden Elektromotor des Koordinatenmessgeräts.

Der untere der beiden dargestellten Mikrocontroller MC ist beispielsweise für die Überwachung des Motorstroms durch einen bestimmten Elektromotor M im Einsatz, wobei dieser Elektromotor M ebenfalls in Figur 5 dargestellt ist. Dieser Mikrocontroller MC ist über eine Signalverbindung SV mit einer Leistungsstufe PS verbunden, beispielsweise der in Figur 2 dargestellten Leistungsstufe PS. Ferner ist wiederum ein Tachosignalgeber TG vorgesehen, der über eine Signalleitung SL mit der Leistungsstufe PS verbunden ist und der ein Tachosignal gemäß der Bewegung des Elektromotors M erzeugt.

Außerdem ist in Figur 5 eine elektrische Leitung C11 erkennbar, die von einem Anschluss P1 auf einem ersten elektrischen Potential über zumindest einen ersten Schalter SW1 und zumindest einen zweiten Schalter SW2 zu dem Motor M führt und diesen während des Motorbetriebes mit Motorstrom versorgt. Eine entsprechende weitere elektrische Leitung C21 verbindet den Motor M mit einem zweiten elektrischen Potential (P2). Während des normalen Betriebes des Elektromotors M steuert die Leistungsstufe PS den Motorstrom durch die Leitungen C11, C21.

Wie ebenfalls aus Figur 5 erkennbar ist, ist der Computer PC, bei dem es sich beispielsweise um einen handelsüblichen Personalcomputer handeln kann, über den Datenbus B mit dem ersten Schalter SW1 verbunden. Zur Betätigung dieses Schalters können weitere Elemente vorgesehen sein, die ein entsprechendes Steuersignal des Computers PC, das über den Datenbus B übertragen wird, zur Betätigung des Schalters SW1 umwandeln. Im Ergebnis ist der Computer PC jedenfalls dazu in der Lage, den Schalter SW1 ein- und auszuschalten. Stellt nun der Computer PC während der Überwachung des Motorstroms (auf eine Weise, die noch näher beschrieben wird) fest, dass der Motorstrom unterbrochen werden muss, schaltet der Computer PC den Schalter SW1 aus.

Außerdem ist der Mikrocontroller MC, der über die Signalverbindung SV mit der Leistungsstufe PS verbunden ist, in der Lage, den zweiten Schalter SW2 ein- und auszuschalten.

In Situationen, die noch näher erläutert werden, schaltet der Mikrocontroller den Schalter SW2 aus, um den Motorstrom durch den Motor M zu unterbrechen.

Allgemeiner formuliert und losgelöst von dem konkreten Ausführungsbeispiel gemäß Figur 5 sind vorzugsweise zumindest zwei verschiedene Steuereinrichtungen vorgesehen, die den Motorstrom unabhängig voneinander unterbrechen können. Hierdurch kann eine zusätzliche Sicherheit für den Betrieb des Elektromotors erzielt werden.

Die im Folgenden beschriebenen Ausführungsformen betreffen die Anordnung gemäß Fig. 5. Sowohl der Computer PC als auch der Mikrocontroller MC sind wie bereits anhand von Fig. 5 beschrieben in der Lage, bei Erreichen und/oder Überschreiten des Stromgrenzwertes "Notaus-Maßnahmen" zu ergreifen. Hierzu können beide Einrichtungen einzeln und unabhängig voneinander nicht nur den Motorstrom unterbrechen, sondern auch zusätzlich die anhand von Fig. 2 beschriebenen Maßnahmen ergreifen, nämlich den so genannten Zwischenkreis (elektrische Verbindungen C3, C4 in Fig. 2) unterbrechen und den Motor kurzschließen.

Der Computer PC und der Mikrocontroller MC überwachen sich gegenseitig daraufhin, ob im Zusammenhang mit der Überwachung des Motorstroms stehende Funktionen innerhalb vorgegebener Zeitintervalle ausgeführt werden. Hierzu tauschen die beiden Einrichtungen Zeitstempel aus. Unter Zeitstempeln werden Signale verstanden, die nach Ausführung einer der zu überwachenden Funktionen an die jeweils andere Einrichtung gesendet werden und die Informationen über einen Zeitpunkt der ausgeführten Funktion, insbesondere über den Zeitpunkt des Abschlusses der Ausführung der Funktion enthalten. Wird eine dieser Funktionen zu spät ausgeführt, erkennt die jeweils andere Einrichtung dies daran, dass zu einem Zeitpunkt, an dem die Funktion hätte ausgeführt sein müssen, entweder kein entsprechender Zeitstempel empfangen wurde oder ein Zeitstempel empfangen wurde, der einem zu späten Zeitpunkt der Ausführung entspricht. In beiden Fällen leitet die Einrichtung die "Notaus-Maßnahmen" ein.

Optional kann vorgesehen sein, dass die Stromüberwachung während des Betriebes des Koordinatenmessgeräts ausgeschaltet werden kann, beispielsweise während einer bestimmten Betriebsphase (z. B. eine Beschleunigungsphase), in Abhängigkeit einer vorgegebenen Position der Koordinatenmesseinrichtung und/oder in Abhängigkeit von einem Betriebszustand einer an der Stromüberwachung beteiligten Einrichtung. Zum Ausschalten wird gefordert, dass der Computer ein vorgegebenes Signal (z. B. einen bestimmten Wert einer Signalgröße) über einen Zeitraum vorgegebener Länge hinweg wiederholt zu dem Mikrocontroller überträgt. Zur Bestätigung sendet der Mikrocontroller das Signal zumindest am Ende des vorgegebenen Zeitraums wieder zurück zu dem Computer. Erst wenn der Computer dieses Signal empfängt, wird die Stromüberwachung auf dem Computer deaktiviert. Die gleiche Prozedur kann optional auch mit jeweils umgekehrter Signalrichtung (der Mikrocontroller sendet über den Zeitraum hinweg wiederholt das vorgegebene Signal, usw.) durchgeführt werden, um die Stromüberwachung auf dem Mikrocontroller auszuschalten. Diese Prozedur ist erforderlich, wenn die Stromüberwachung (das heißt zumindest die Ermittlung des aktuellen Stromgrenzwertes und die Überprüfung, ob der aktuelle Motorstrom den Grenzwert erreicht und/oder überschreitet), wie es bei einer bevorzugten Ausführungsform der Fall ist, auch auf dem Mikrocontroller durchgeführt wird. Vorzugsweise stehen in diesem Fall dem Computer für jeden der zu überwachenden Elektromotoren und dem jeweils dem Elektromotor zugeordneten Mikrocontroller (es ist auch ein einziger Mikrocontroller für mehrere oder alle Motoren möglich) folgende Werte bzw. Signale zur Verfügung:
i) das Tachosignal zur Ermittlung der aktuellen Geschwindigkeit,
ii) der aktuelle Wert der Geschwindigkeit der Koordinatenmesseinrichtung, die durch das Koordinatenmessgerät selbst ermittelt wurde,
iii) der aktuelle gemessene Stromwert des Motorstroms und
iv) der Sollgeschwindigkeitswert der Bewegungskomponente, die dem jeweiligen Elektromotor zugeordnet ist.

Durch Ermittlung des zu erwartenden Stromgrenzwertes aus i) und/oder ii) sowie aus iv) und durch Vergleich mit dem gemessenen Wert aus iii) wird überprüft, ob der gemessenen Wert plausibel ist.

In der Ausführungsform, in der sowohl der Computer als auch der Mikrocontroller separat eine Stromüberwachung durchführen, stehen die Informationen über die z. B. in einem Eich-Betrieb ermittelten Stromwerte bei behinderungsfreiem Betrieb beiden Einrichtungen zur Verfügung. Die dem Computer zur Verfügung stehenden Daten sind beispielsweise auf seiner Festplatte gespeichert. Die dem Mikrocontroller zur Verfügung stehenden Daten sind beispielsweise in einem Flash-Speicher einer Karte gespeichert, an der sowohl der Speicher als auch der Mikrocontroller angeordnet sind. Computer und Mikrocontroller sind daher in der Lage, separat und unabhängig voneinander einen Stromgrenzwert zu ermitteln. Die Daten sind vorzugsweise gegen Veränderung gesichert.

## Patentansprüche

1. Verfahren zum Betreiben eines Koordinatenmessgeräts (11), wobei eine Koordinatenmesseinrichtung (5), insbesondere ein Messkopf, des Koordinatenmessgeräts (11) angetrieben durch zumindest einen Elektromotor (M) in zumindest einer Richtung verfahrbar ist und wobei das Verfahren folgende Schritte aufweist:
a) ein elektrischer Antriebstrom, der durch den Elektromotor (M) fließt, um eine Bewegung des Elektromotors (M) und auf diese Weise eine Bewegung der Koordinatenmesseinrichtung (5) zu bewirken, wird gemessen,
b) abhängig von einer Sollgeschwindigkeit und/oder abhängig von einer Sollbeschleunigung, mit denen die Bewegung des Elektromotors (M) oder die Bewegung der Koordinatenmesseinrichtung (5) ablaufen soll, wird ein Grenzwert I_{T} oder ein Grenzwertband, d. h. ein Bereich von Werten für den Antriebstrom, der durch einen unteren Grenzwert und einen oberen Grenzwert definiert ist, für den elektrischen Antriebstrom ermittelt, wobei ein funktionaler Zusammenhang zwischen der Sollgeschwindigkeit und/oder der Sollbeschleunigung einerseits und dem Stromgrenzwert andererseits fest vorgegeben ist, und
c) wenn der elektrische Antriebstrom den in Schritt b) ermittelten Grenzwert I_{T} erreicht und/oder wenn der elektrische Antriebstrom den ermittelten Grenzwert I_{T} überschreitet oder wenn das Grenzwertband verlassen wird, wird die Koordinatenmesseinrichtung (5) in einen vordefinierten Zustand gebracht.

2. Verfahren nach dem vorhergehenden Anspruch, wobei der elektrische Antriebstrom abgeschaltet wird, wenn der elektrische Antriebstrom den ermittelten Grenzwert I_{T} kontinuierlich über ein Zeitintervall vorgegebener Länge hinweg erreicht und/oder überschreitet.

3. Verfahren nach einem der vorhergehenden Ansprüche, wobei in Schritt c) gemäß Anspruch 1 als elektrischer Antriebstrom ein Wert verwendet wird, der nach Glättung von zeitlichen Schwankungen des in Schritt a) ermittelten Messwertes erhalten worden ist.

4. Verfahren nach einem der vorhergehenden Ansprüche, wobei ein funktionaler Zusammenhang zwischen der Sollgeschwindigkeit und/oder der Sollbeschleunigung einerseits und dem Stromgrenzwert andererseits zusätzlich durch einen oder mehrere Parameter bestimmt wird, die durch einen oder mehrere der im Folgenden aufgezählten Faktoren eindeutig bestimmt sind: eine Umgebungstemperatur, eine Temperatur von Teilen des Koordinatenmessgeräts (11), eine Position der Koordinatenmesseinrichtung (5) in einem ortsfesten Koordinatensystem, eine relative Position der Koordinatenmesseinrichtung (5) in Bezug auf das Messobjekt oder in Bezug auf andere Teile eines Messaufbaus und/oder ein Betriebszustand des Koordinatenmessgeräts (11).

5. Verfahren nach einem der vorhergehenden Ansprüche, wobei, bevor der elektrische Antriebstrom abgeschaltet wird, eine Stromrichtung des elektrischen Antriebstroms zunächst umgekehrt wird.

6. Verfahren nach einem der vorhergehenden Ansprüche, wobei eine Mehrzahl von Elektromotoren (M) vorgesehen ist, um die Bewegung der Koordinatenmesseinrichtung (5) zu bewirken, wobei die Bewegungen der Elektromotoren (M) eindeutig Bewegungskomponenten der Bewegung der Koordinatenmesseinrichtung (5) zugeordnet werden können, wobei die Schritte a) bis c) gemäß Anspruch 1 für jeden der Mehrzahl von Elektromotoren (M) separat ausgeführt werden, wobei die Sollgeschwindigkeit und/oder Sollbeschleunigung in Schritt b) jeweils für die Bewegungskomponenten zur Verfügung stehen und wobei abhängig davon jeweils der Grenzwert I_{T} ermittelt wird.

7. Verfahren nach einem der vorhergehenden Ansprüche, wobei zumindest ein in Schritt a) gemäß Anspruch 1 gemessener Wert des elektrischen Antriebstroms während des Betriebes des Koordinatenmessgeräts (11), insbesondere während einer Bewegung der Koordinatenmesseinrichtung (5), mit einem erwarteten Wert verglichen wird, um die Messung des elektrischen Antriebstroms auf Messfehler zu überprüfen.

8. Verfahren nach dem vorhergehenden Anspruch, wobei der erwartete Wert unter Verwendung der Sollgeschwindigkeit und der Sollbeschleunigung ermittelt wird.

9. Verfahren nach einem der vorhergehenden Ansprüche, wobei während eines Eich-Betriebes des Koordinatenmessgeräts (11), während dem die Koordinatenmesseinrichtung (5) ohne Behinderung durch Gegenstände frei verfahren wird, normale Werte des elektrischen Antriebstroms für verschiedene Werte der Geschwindigkeit und/oder der Beschleunigung der Koordinatenmesseinrichtung (5) gemessen und gespeichert werden und wobei aus den normalen Werten vor dem Betrieb des Koordinatenmessgeräts (11) Grenzwerte des elektrischen Antriebstroms für verschiedene Werte der Sollgeschwindigkeit und/oder der Sollbeschleunigung festgelegt werden.

10. Verfahren nach dem vorhergehenden Anspruch, wobei die Geschwindigkeit und die Beschleunigung der Koordinatenmesseinrichtung (5) während des Eich-Betriebes unter Verwendung einer für den eigentlichen Betrieb des Koordinatenmessgeräts (11) vorgesehenen Auswertungseinrichtung (PC) zur Bestimmung von Koordinaten und/oder unter Verwendung eines Tachosignals des Elektromotors (M) bestimmt werden.

11. Koordinatenmessgerät (11), mit einer Koordinatenmesseinrichtung (5), insbesondere einem Messkopf, die angetrieben durch zumindest einen Elektromotor (M) in zumindest einer Richtung verfahrbar ist, und wobei das Koordinatenmessgerät (11) Folgendes aufweist:
a) eine Strom-Messeinrichtung (IM), die ausgestaltet ist, einen elektrischen Antriebstrom, der durch den Elektromotor (M) fließt, um eine Bewegung des Elektromotors (M) und auf diese Weise eine Bewegung der Koordinatenmesseinrichtung (5) zu bewirken, zu messen,
b) eine Sollwert-Ermittlungseinrichtung (PC, MC), die ausgestaltet ist, abhängig von einer Sollgeschwindigkeit und/oder abhängig von einer Sollbeschleunigung, mit denen die Bewegung des Elektromotors (M) oder die Bewegung der Koordinatenmesseinrichtung (5) ablaufen soll, einen Grenzwert (I_{T}) oder ein Grenzwertband, d. h. ein Bereich von Werten für den Antriebstrom, der durch einen unteren Grenzwert und einen oberen Grenzwert definiert ist, für den elektrischen Antriebstrom zu ermitteln, wobei ein funktionaler Zusammenhang zwischen der Sollgeschwindigkeit und/oder der Sollbeschleunigung einerseits und dem Stromgrenzwert andererseits fest vorgegeben ist, und
c) eine Betätigungseinrichtung, die mit der Strom-Messeinrichtung und mit der Sollwert-Ermittlungseinrichtung verbunden ist und die ausgestaltet ist, die Koordinatenmesseinrichtung (5) in einen vordefinierten Zustand zu bringen, wenn der elektrische Antriebstrom den von der Sollwert-Ermittlungseinrichtung (PC, MC) ermittelten Grenzwert I_{T} erreicht und/oder wenn der elektrische Antriebstrom den von der Sollwert-Ermittlungseinrichtung (PC, MC) ermittelten Grenzwert I_{T} überschreitet bzw. wenn der Antriebstrom das Grenzwertband verlässt.

12. Koordinatenmessgerät nach dem vorhergehenden Anspruch, wobei die Betätigungseinrichtung eine Abschalteinrichtung (PC, SW1, MC, SW2) aufweist, die mit der Strom-Messeinrichtung und mit der Sollwert-Ermittlungseinrichtung verbunden ist und die ausgestaltet ist, den elektrischen Antriebstrom abzuschalten, wenn der elektrische Antriebstrom den ermittelten Grenzwert I_{T} erreicht und/oder wenn der elektrische Antriebstrom den ermittelten Grenzwert I_{T} überschreitet bzw. wenn der Antriebstrom das Grenzwertband verlässt.

## Claims

1. Method for operating a coordinate measuring machine (11), wherein a coordinate measuring device (5), in particular a measuring head, of the coordinate measuring machine (11) can be moved in at least one direction, driven by at least one electric motor (M), and wherein the method has the following steps:
a) an electrical drive current which flows through the electric motor (M) in order to move the electric motor (M) and in this way to move the coordinate measuring device (5), is measured,
b) depending on a set speed and/or depending on a set acceleration at which the movement of the electric motor (M) or the movement of the coordinate measuring device (5) is intended to take place, a limit value I_{T} or a limit value band, that is to say a range of values for the drive current which is defined by a lower limit value and an upper limit value, is determined for the electrical drive current, wherein a fixed functional relationship is predetermined between the set speed and/or the set acceleration on the one hand and the current limit value on the other hand, and
c) if the electrical drive current reaches the limit value I_{T} determined in step b), and/or if the electrical drive current exceeds the determined limit value I_{T}, or if the limit value band is departed from, the coordinate measuring device (5) is brought to a predefined state.

2. Method according to the preceding claim, wherein the electrical drive current is switched off if the electrical drive current reaches and/or exceeds the determined limit value I_{T} continuously over a time interval of predetermined length.

3. Method according to one of the preceding claims, wherein, in step c) in Claim 1, a value which has been obtained after smoothing of time fluctuations in the measured value determined in step a) is used as the electrical drive current.

4. Method according to one of the preceding claims, wherein a functional relationship is determined between the set speed and/or the set acceleration on the one hand and the current limit value on the other hand, in addition by means of one or more parameters which are clearly determined by one or more of the factors listed in the following text: an environmental temperature, a temperature of parts of the coordinate measuring machine (11), a position of the coordinate measuring device (5) in a fixed-position coordinate system, a relative position of the coordinate measuring device (5) with respect to the measurement object or with respect to other parts of a test layout, and/or an operating state of the coordinate measuring machine (11).

5. Method according to one of the preceding claims, wherein the current direction of the electrical drive current is first of all reversed, before the electrical drive current is switched off.

6. Method according to one of the preceding claims, wherein a plurality of electric motors (M) are provided in order to move the coordinate measuring device (5), wherein the movements of the electric motors (M) can be clearly associated with movement components of the movement of the coordinate measuring device (5), wherein the steps a) to c) in Claim 1 are carried out separately for each of the plurality of electric motors (M), wherein the set speed and/or the set acceleration in step b) are/is available for each of the movement components, and wherein the limit value I_{T} is in each case determined as a function of this.

7. Method according to one of the preceding claims, wherein at least one value, as measured in step a) in Claim 1, of the electrical drive current during operation of the coordinate measuring machine (11), in particular during movement of the coordinate measuring device (5), is compared with an expected value in order to check the measurement of the electrical drive current for measurement errors.

8. Method according to the preceding claim, wherein the expected value is determined using the set speed and the set acceleration.

9. Method according to one of the preceding claims, wherein normal values of the electrical drive current are measured and stored for various values of the speed and/or of the acceleration of the coordinate measuring device (5) during a calibration mode of the coordinate measuring machine (11), during which the coordinate measuring device (5) is moved freely without being impeded by objects, and wherein limit values of the electrical drive current are defined for various values of the set speed and/or of the set acceleration from the normal values, before operation of the coordinate measuring machine (11).

10. Method according to the preceding claim, wherein the speed and the acceleration of the coordinate measuring device (5) are determined during the calibration mode using an evaluation device (PC), which is provided for actual operation of the coordinate measuring machine (11), in order to determine coordinates and/or using a tacho-signal from the electric motor (M).

11. Coordinate measuring machine (11) having a coordinate measuring device (5), in particular a measuring head, which can be moved in at least one direction, driven by at least one electric motor (M), and wherein the coordinate measuring machine (11) has the following:
a) a current measuring device (IM) which is designed to measure an electrical drive current which flows through the electric motor (M) in order to move the electric motor (M) and in this way to move the coordinate measuring device (5),
b) a set-value determination device (PC, MC) which is designed to determine a limit value (I_{T}) or a limit value band for the electrical drive current, that is to say a range of values for the drive current which is defined by a lower limit value and an upper limit value, depending on a set speed and/or depending on a set acceleration at which the movement of the electric motor (M) or the movement of the coordinate measuring device (5) is intended to take place, wherein a fixed functional relationship is predetermined between the set speed and/or the set acceleration on the one hand and the current limit value on the other hand, and
c) an operating device, which is connected to the current measuring device and to the set-value determination device and which is designed to bring the coordinate measuring device (5) to a predefined state if the electrical drive current reaches the limit value I_{T} determined by the set-value determination device (PC, MC), and/or if the electrical drive current exceeds the limit value I_{T} determined by the set-value determination device (PC, MC), or if the drive current departs from the limit value band.

12. Coordinate measuring machine according to the preceding claim, wherein the operating device has a switch-off device (PC, SW1, MC, SW2), which is connected to the current measuring device and to the set-value determination device and which is designed to switch off the electrical drive current if the electrical drive current reaches the determined limit value I_{T}, and/or if the electrical drive current exceeds the determined limit value I_{T}, and/or if the drive current departs from the limit value band.

## Revendications

1. Procédé d'utilisation d'un appareil de mesure de coordonnées (11), un dispositif de mesure de coordonnées (5), en particulier une tête de mesure, de l'appareil de mesure de coordonnées (11) pouvant être déplacé entraîné par au moins un moteur électrique (M) dans au moins un sens et le procédé présentant les étapes suivantes :
a) un courant d'entraînement électrique qui traverse le moteur électrique (M) afin de provoquer un mouvement du moteur électrique (M) et de cette manière un mouvement du dispositif de mesure de coordonnées (5), est mesuré,
b) en fonction d'une vitesse de consigne et/ou en fonction d'une accélération de consigne, avec lesquelles le mouvement du moteur électrique (M) ou le mouvement du dispositif de mesure de coordonnées (5) doit se dérouler, une valeur limite I_{T} ou une bande de valeur limite, c'est-à-dire une plage de valeurs pour le courant d'entraînement qui est définie par une valeur limite inférieure et une valeur limite supérieure, est déterminée pour le courant d'entraînement électrique, un rapport fonctionnel entre la vitesse de consigne et/ou l'accélération de consigne d'une part et la valeur limite du courant d'autre part étant fixement prescrite et
c) si le courant d'entraînement électrique atteint la valeur limite I_{T} déterminée à l'étape b) et/ou si le courant d'entraînement électrique dépasse la valeur limite déterminée I_{T} ou si la bande de valeur limite est quittée, le dispositif de mesure de coordonnées (5) est amené dans un état prédéfini.

2. Procédé selon la revendication précédente, le courant d'entraînement électrique étant coupé si le courant d'entraînement électrique atteint et/ou dépasse la valeur limite déterminée I_{T} en continu au-delà d'un intervalle de temps de longueur prescrite.

3. Procédé selon l'une quelconque des revendications précédentes, à l'étape c) selon la revendication 1 comme courant d'entraînement électrique étant utilisée une valeur qui a été obtenue après lissage d'oscillations temporelles de la valeur de mesure déterminée à l'étape a).

4. Procédé selon l'une quelconque des revendications précédentes, un rapport fonctionnel entre la vitesse de consigne et/ou l'accélération de consigne d'une part et la valeur limite de courant d'autre part étant déterminé en outre par un ou plusieurs paramètres qui sont déterminés nettement par un ou plusieurs des facteurs énumérés par la suite : une température ambiante, une température de pièces de l'appareil de mesure de coordonnées (11), une position du dispositif de mesure de coordonnées (5) dans un système de coordonnées fixe, une position relative du dispositif de mesure de coordonnées (5) par rapport à l'objet de mesure ou par rapport à d'autres parties d'une structure de mesure et/ou un état de fonctionnement de l'appareil de mesure de coordonnées (11).

5. Procédé selon l'une quelconque des revendications précédentes, avant que le courant d'entraînement électrique ne soit coupé, un sens du courant d'entraînement électrique étant tout d'abord inversé.

6. Procédé selon l'une quelconque des revendications précédentes, une pluralité de moteurs électriques (M) étant prévue afin de provoquer le mouvement du dispositif de mesure de coordonnées (5), les mouvements des moteurs électriques (M) pouvant être nettement associés aux composants du mouvement du dispositif de mesure de coordonnées (5), les étapes a) à c) selon la revendication 1 étant réalisées séparément pour chaque moteur de la pluralité des moteurs électriques (M), la vitesse de consigne et/ou l'accélération de consigne à l'étape b) se trouvant à disposition respectivement des composants de mouvement et la valeur limite I_{T} étant déterminée respectivement en fonction de cela.

7. Procédé selon l'une quelconque des revendications précédentes, au moins une valeur mesurée à l'étape a) selon la revendication 1 du courant d'entraînement électrique pendant le fonctionnement de l'appareil de mesure de coordonnées (11), en particulier pendant un mouvement du dispositif de mesure de coordonnées (5) étant comparée à une valeur attendue afin de vérifier d'éventuelles erreurs de mesure du courant d'entraînement électrique.

8. Procédé selon la revendication précédente, la valeur attendue étant déterminée en utilisant la vitesse de consigne et l'accélération de consigne.

9. Procédé selon l'une quelconque des revendications précédentes, pendant un mode d'étalonnage de l'appareil de mesure de coordonnées (11), pendant lequel le dispositif de mesure de coordonnées (5) est déplacé librement sans gêne due à d'objets, des valeurs normales du courant d'entraînement électrique pour différentes valeurs de vitesse et/ou d'accélération du dispositif de mesure de coordonnées (5) étant mesurées et enregistrées et à partir des valeurs normales avant le fonctionnement de l'appareil de mesure de coordonnées (11) étant fixées des valeurs limites du courant d'entraînement électrique pour différentes valeurs de vitesse de consigne et/ou d'accélération de consigne.

10. Procédé selon la revendication précédente, la vitesse et l'accélération du dispositif de mesure de coordonnées (5) étant déterminées pendant le mode d'étalonnage en utilisant un dispositif d'évaluation (PC) prévu pour le fonctionnement proprement dit de l'appareil de mesure de coordonnées (11) pour la détermination de coordonnées et/ou en utilisant un signal tachymétrique du moteur électrique (M).

11. Appareil de mesure de coordonnées (11) avec un dispositif de mesure de coordonnées (5), en particulier une tête de mesure qui peut être déplacée entraînée par au moins un moteur électrique (M) dans au moins un sens et l'appareil de mesure de coordonnées (11) présentant ce qui suit :
a) un dispositif de mesure de courant (IM) qui est configuré de sorte à mesurer un courant d'entraînement électrique qui traverse le moteur électrique (M) afin de provoquer un mouvement du moteur électrique (M) et de cette manière un mouvement du dispositif de mesure de coordonnées (5),
b) un dispositif de détermination de valeur de consigne (PC, MC) qui est configuré de sorte à déterminer en fonction d'une vitesse de consigne et/ou en fonction d'une accélération de consigne, avec lesquelles le mouvement du moteur électrique (M) ou le mouvement du dispositif de mesure de coordonnées (5) doit se dérouler, une valeur limite I_{T} ou une bande de valeur limite, c'est-à-dire une plage de valeurs pour le courant d'entraînement qui est définie par une valeur limite inférieure et une valeur limite supérieure, pour le courant d'entraînement électrique, un rapport fonctionnel entre la vitesse de consigne et/ou l'accélération de consigne d'une part et la valeur limite de courant d'autre part étant fixement prescrit, et
c) un dispositif d'actionnement qui est relié au dispositif de mesure de courant et au dispositif de détermination de valeur de consigne et qui est configuré de sorte à amener le dispositif de mesure de coordonnées (5) dans un état prédéfini si le courant d'entraînement électrique atteint la valeur limite I_{T} déterminée par le dispositif de détermination de valeur de consigne (PC, MC) et/ou si le courant d'entraînement électrique dépasse la valeur limite I_{T} déterminée par le dispositif de détermination de valeur de consigne (PC, MC) ou si le courant d'entraînement quitte la bande de valeur limite.

12. Appareil de mesure de coordonnées selon la revendication précédente, le dispositif d'actionnement présentant un dispositif d'arrêt (PC, SW1, MC, SW2) qui est relié au dispositif de mesure de courant et au dispositif de détermination de la valeur de consigne et qui est configuré de sorte à couper le courant d'entraînement électrique si le courant d'entraînement électrique atteint la valeur limite déterminée I_{T} et/ou si le courant d'entraînement électrique dépasse la valeur limite déterminée I_{T} ou si le courant d'entraînement quitte la bande de valeur limite.
